# EUROPEAN PATENT APPLICATION

(11) **EP 1 832 327 A2**
(43) Date of publication of application: **12.09.2007**
(21) Application number: 07102632.2
(22) Date of filing: 19.02.2007
(51) Int. Cl.: B01D 39/20

(54) **Filter and method for backwashing of the filter**

(30) Priority: 07.03.2006 JP 2006061477
(71) Applicant: NGK INSULATORS, LTD., Nagoya-city, Aichi 467-8530 (JP)
(72) Inventor: Takahashi, Tomonori, Nagoya-city Aichi 467-8530 (JP); Sakashita, Satoshi, Nagoya-city Aichi 467-8530 (JP)
(74) Representative: TBK-Patent

(57) **Abstract**

The present inventive filter is a columnar porous body 1 having numerous flow paths 2 formed in parallel in axial direction, numerous liquid collecting slits 3 formed with extending in axial direction and allowing a group of the flow paths formed in parallel and the outside of the porous body to communicate with each other, wherein a group of the flow paths 2a communicating with the liquid collecting slits 3 are plugged at both ends. Liquid collecting slits 3a into which the backwashing liquid can flow among the liquid collecting slits 3 are disposed in such a manner that 75% or more of the length in axial direction is positioned on backwashing liquid non-outflow end side with respect to the position which is 60% of the length of the porous body 1 in axial direction from the backwashing liquid outflow end of the porous body 1.

## Description

### BACKGROUND OF THE INVENTION

### Technical Field

The present invention relates to a filter and a method for backwashing the filter, and, more particularly, to a filter which can be uniformly and totally backwashed and a method for backwashing the filter.

### Background Art

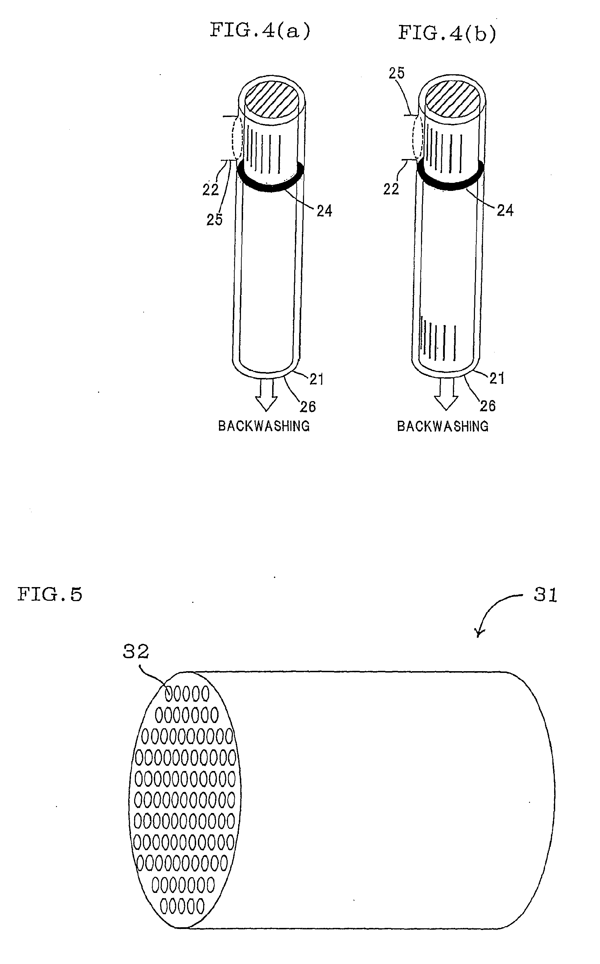

A monolithic filter used as a filter for solid-liquid separation as in water purification process is a columnar porous body (monolithic filter) 31 in which a plurality of flow paths 32 are formed in parallel in axial direction as shown in Fig. 5. In this structure, when a liquid to be treated (raw liquid) is supplied to the flow paths 32 from one end of the porous body, the liquid to be treated permeates through the pore of the porous body and flows out of the porous body. In this case, suspended materials or harmful materials such as pathogenic microorganisms are removed at walls of the porous body and the liquid flowing out of the porous body can be recovered as a purified filtrate.

Recently, large-sized filters have been proposed in order to further improve the filtering capacity of filters provided with monolithic filters. However, even though the filters were made larger, the filtering capacity was not able to be improved as expected due to the structure of the filters to filter a liquid to be treated which was supplied to flow paths and to discharge the filtrate to the external space through pores of the porous body. It is considered that this is because in the case of a monolithic filter, the filtrate filtered in the flow paths in the vicinity of the central part of the porous body suffers a great flow resistance at the time of flowing out of the porous body and only the flow paths in the vicinity of outer peripheral part of the porous body which are small in flow resistance are used for filtration, and hence substantial filtering area is not so large as the area of actually formed filter membrane.

In an attempt to solve the problem, there is proposed a filter in which the amount of liquid permeating through the flow paths in the vicinity of the central part of a porous body is increased by providing liquid collecting flowpaths and slit-like voids (sometimes referred to as "liquid collecting slits" in this specification) extending in axial direction in the porous body (see, for example, Patent Document 1). In this filter, since the filtrate filtered through the flowpaths in the vicinity of the central part of the porous body directly flows out into the external space through the liquid collecting slits, the distance of the filtrate permeating through the inside of the porous body is shortened, resulting in decrease of flow resistance. Therefore, the liquid permeation amount sharply increases to greatly improve the filtrating capacity.

Even in the filter improved in filtration capacity as mentioned above, if filtration is continuously carried out by this filter, suspended materials filtered off are gradually accumulated on the wall surface which forms the flow paths of the porous body, and hence the liquid permeation amount gradually decreases. Therefore,a washing operation called"backwashing" is regularly or irregularly carried out for the porous body by passing clarified water or cleaning liquid (hereinafter sometimes referred to as merely "backwashing liquid") under pressure in the direction opposite to that of filtering operation. By this backwashing, the suspended materials or the like accumulated on the surface of walls forming the flow paths of the porous body can be peeled off and removed, and thus the liquid permeation amount can be recovered nearly to an initial level.

However, in carrying out such backwashing, thewholeporous body is not uniformly backwashed, and filtration treatment after the backwashing is mainly carried out in only a part of the porous body which has been sufficientlybackwashed, and thus filtration efficiency sometimes lowers.
Patent Document 1: JP-B-6-16819

### SUMMARY OF THE INVENTION

The present invention has been accomplished to solve the above problems and provides a filter which can be totally and uniformly washed by backwashing and a method for backwashing of the filter.

In order to attain the above objectives, the following filter and method for backwashing of the filter are provided by the present invention.

[1] A filter provided with a columnar porous body having a plurality of flow paths formed in parallel in axial direction in which liquid collecting slits extending in axial direction and communicating, a group of the flow paths formed in parallel, with the outside of the porous body is formed in the porous body, both ends of the group of the flow paths communicating with the liquid collecting slits are plugged, and during filtration, a liquid to be treated which is fed to the flow paths from one end side of the porous body permeates through the pores of the porous body and flows out of the porous body, and during backwashing, a backwashing liquid flowing into the porous body from at least a part of the liquid collecting slits permeates through the pores of the porous body and flows out from one end of the porous body, characterized in that liquid collecting slits into which the backwashing liquid can flow (backwashing liquid inflow slits) among the liquid collecting slits are disposed in such a manner that 75% or more of the length in axial direction of the slits is positioned on the end side of the porous body from which the backwashing liquid does not flow out (backwashing liquid non-outflow end) with respect to the position which is 60% of the length in axial direction of the porous body from the end of the porous body from which the backwashing liquid flows out (backwashing liquid outflow end).

[2] A filter according to [1] further provided with a casing capable of containing the porous body therein, said casing having a raw liquid feed opening capable of feeding a liquid to be treated (raw liquid) to the porous body and a filtrate discharging opening capable of discharging to the outside the filtrate flowing out of the porous body, said casing further having a backwashing liquid feed opening capable of feeding a backwashing liquid to the porous body and being formed to be served as bifunctionally or independently of the filtrate discharging opening and a backwashing liquid discharging opening capable of discharging to the outside the backwashing liquid flowing out of the porous body and being formed to be served as bifunctionallyor independently of the raw liquid feed opening, a flow stop being disposed at the position on the side of the backwashing liquid discharging opening with respect to the backwashing inflow slits in the space between the casing and the porous body so that the backwashing liquid introduced from the backwashing liquid feed opening does not move to the side of the backwashing liquid discharging opening through the space between the casing and the porous body.

[3] A filter according to [1] or [2], wherein the porous body is a ceramic porous body.

[4] A method for backwashing the filter according to any one of [1]-[3], which comprises allowing a backwashing liquid to flow into the filter from at least the backwashing liquid inflow slits and discharging the backwashing liquid from an end of the porous body.

### [Brief Description of the Drawings]

Fig. 1 is a perspective view schematically showing one embodiment of a filter of the present invention.
Fig. 2 is a perspective view schematically showing another embodiment of a filter of the present invention.
Fig. 3(a) - Fig. 3(f) are perspective views schematically showing the filters of the Examples, and Fig. 3 (g) and Fig. 3 (h) are perspective views schematically showing the filters of the Comparative Examples.
Fig. 4(a) and Fig. 4(b) are perspective views schematically showing filters of the Examples.
Fig. 5 is a perspective view schematically showing a conventional monolithic filter.

### [Description of Reference Numerals]

1: Porous body, 2, 32: Flow path, 2a: Flow path both ends of which are plugged, 3: Liquid collecting slit, 3a: Backwashing liquid inflow slit, 4: One end, 5: Another end, 6, 23: Position of 60%, 7: Side face part, 11: Casing, 12, 21: Raw liquid feed opening, 13, 22: Filtrate outflow opening, 14: Seal ring, 15: Space, 16, 24: Flow stop, 17: Backwashing liquid outflow end, 18: Backwashing liquid non-outflow end, 19, 25: Backwashing liquid feed opening, 20, 26: Backwashing liquid discharging opening, 31: Monolithic filter, 100, 200: Filter.

### DESCRIPTION OF THE PREFERRED EMBODIMENT

According to the filter of the present invention, since the backwashing liquid inflow slits formed in the porous body are disposed in such a manner that 75% or more of their length in axial direction is positioned on the end side of the porous body from which the backwashing liquid does not flow out with respect to the position which is 60% of the length of the porous body in axial direction from the end of the porous body from which the backwashing liquid flows out, most of the backwashing liquid flows into the porous body from the backwashing liquid inflow slits at the time of backwashing, whereby it becomes possible to uniformly backwash the whole of the porous body.

A best mode for carrying out the invention will be specifically explained below, and it should be understood that the present invention is not limited to the following embodiments, and suitable changes, improvements, or the like, in design can be made without deviating from the spirit of the present invention.

### (1) Filter:

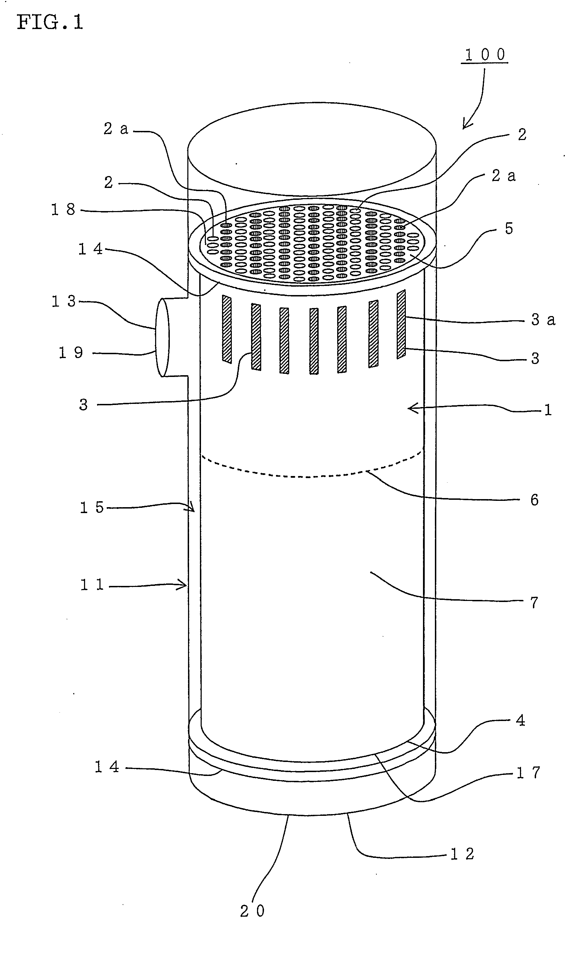

As shown in Fig. 1, the filter 100 of this embodiment has a columnar porous body 1 in which a plurality of flow paths 2 are formed in parallel in axial direction, a plurality of liquid collecting slits 3 extending in axial direction and communicating, a group of the flow paths 2 formed in parallel, with the outside of the porous body 1 is formed, and both ends of the group of the flow paths 2a communicating with the liquid collecting slits 3 are plugged (both end-plugged flowpaths). During filtration, a liquid to be treated which is fed to the flow paths 2 from one end 4 side of the porous body 1 permeates through the pores of the porous body 1 and flows out of the porous body 1, and during backwashing, a backwashing liquid flowing into the porous body 1 from at least a part of the liquid collecting slits 3 permeates through the pores of the porous body 1 and flows out from the one end 4 side of the porous body 1 (backwashing liquid discharging end 17). Furthermore, in the filter 100 of the present invention, liquid collecting slits 3a into which the backwashing liquid can flow (backwashing liquid inflow slits) among the liquid collecting slits 3 are disposed in such a manner that 75% or more of the length in axial direction is positioned on the other end 5 (backwashing liquid non-outflow end 18) side of the porous body 1 with respect to the position 6 which is 60% of the length of the porous body 1 in axial direction from the backwashing liquid outflow end 17 of the porous body 1. In this embodiment, 100% of the liquid collecting slits 3 (backwashing liquid inflow slits 3a) are positioned on the side of the backwashing liquid non-outflow end 18 with respect to the position 6 of 60%. The backwashing liquid outflow end 17 is the end from which the backwashing liquid flows out at the time of backwashing between both ends of the porous body 1, and the backwashing liquid non-outflow end 18 is the end from which the backwashing liquid does not flow out at the time of backwashing. Fig. 1 is a perspective view schematically showing one embodiment of a filter of the present invention. In Fig. 1, the filter is illustrated so that the contained porous body is visible through casing.

Thus, according to a filter of the present invention, since the backwashing liquid inflow slits formed in the porous body are disposed in such a manner that 75% or more of their length in axial direction is positioned on the side of the backwashing liquid non-outflow end with respect to the position which is 60% of the length of the porous body in axial direction from one end of the porous body, most of the backwashing liquid flows into the porous body from the backwashing liquid inflow slits at the time of backwashing, whereby it becomes possible to uniformly backwash the whole of the porous body in lengthwise direction from the backwashing liquid inflow slits to the backwashing liquid non-inflow end. On the other hand, if the liquid collecting slits are formed shifting from the above range to the backwashing liquid outflow end side of the porous body, the amount of backwashing liquid on the side of the backwashing liquid non-outflow end with respect to the backwashing liquid inflow slits is small, and suspended materials or the like accumulated on the side of the backwashing liquid non-outflow end of the porous body cannot be sufficiently peeled off, and the whole porous body cannot be uniformly washed.

In the filter of the present invention, it is preferred that 75% ormore of the length in axial direction of the backwashing liquid inflow slits is positioned on the side of the backwashing liquid non-outflow end with respect to the position which is 60% of the length of the porous body in axial direction from the side of the backwashing liquid outflow end of the porous body, and it is preferred that the backwashing liquid inflow slits are positioned as close as possible to the backwashing liquid non-outflow end. The length in axial direction and area of the backwashing liquid inflow slits are not particularly limited, and can be suitably determined in such a range that pressure loss at filtering and backwashing is not too large and that mechanical strength of the porous body does not lower. The length in axial direction of the backwashing liquid inflow slits is preferably, for example, about 50% of the length of the slits in depth direction (direction of being incised in the porous body in perpendicular to the axial direction).

As shown in Fig. 1, the filter 100 of the present invention is further provided with a casing 11 capable of containing the porous body 1 therein. The casing 11 has a raw liquid feed opening 12 for feeding a liquid to be treated (raw liquid) to the porous body 1 and a filtrate discharging opening 13 which can discharge the filtrate flowing out of the porous body 1 to the outside. The casing 11 further has a backwashing liquid feed opening 19 which can feed a backwashing liquid to the porous body 1 and a backwashing liquid discharging opening 20 which can discharge the backwashing liquid flowing out of the porous body 1 to the outside. In this embodiment, in the casing 11, the backwashing liquid feed opening 19 serves also as the filtrate discharging opening 13, and the backwashing liquid discharging opening 20 serves also as the raw liquid feed opening 12, and the combination is not limited thereto. That is, the backwashing liquid feed opening 19 may be served as the filtrate discharging opening 13 or may be formed independently of the raw liquid feed opening 12. Furthermore, the backwashing liquid discharging opening 20 may be to be served also as the raw liquid feed opening 12 or may be formed independently of the raw liquid feed opening 12. In Fig. 1, a seal ring 14 is fitted at each of one end 4 and the other end 5 of the porous body 1, and the gap between the porous body 1 and the casing is sealed by the seal ring 14. That is, the end face of one end 4 and the end face of the other end 5 of the porous body 1 are isolated from the side face (outer periphery) part 7 of the porous body 1 by the seal rings 14. By constructing the filter 100 of the present invention as mentioned above, in carrying out the filtration treatment, a raw liquid is fed to flow paths 2 through the raw liquid feed opening 12 from the one end 4 side of the porous body 1, and the filtrate filtered through the pores of the porous body 1 is discharged to the outside of the porous body 1 from the side face part 7 and liquid collecting slits 3 of the porous body 1. The discharged filtrate enters into the space 15 surrounded with the side face part 7 of the porous body 1, the casing 11 and the seal rings 14 and is discharged to the outside of the filter 100 from the filtrate discharging opening 13.

Furthermore, when backwashing is carried out, a backwashing liquid is allowed to flow into the filter 100 from the backwashing liquid feed opening 19, and most of the backwashing liquid is introduced from liquid collecting slits 3 (backwashing liquid inflow slits 3a), is allowed to flow into the flow paths 2a both ends of which are plugged, enters into the flow paths 2 through pores of the porous body 1, and is discharged to the outside of the filter 100 from the one end 4 (backwashing liquid outflow end 17) side of the porous body 1 through the backwashing liquid discharging opening 20.

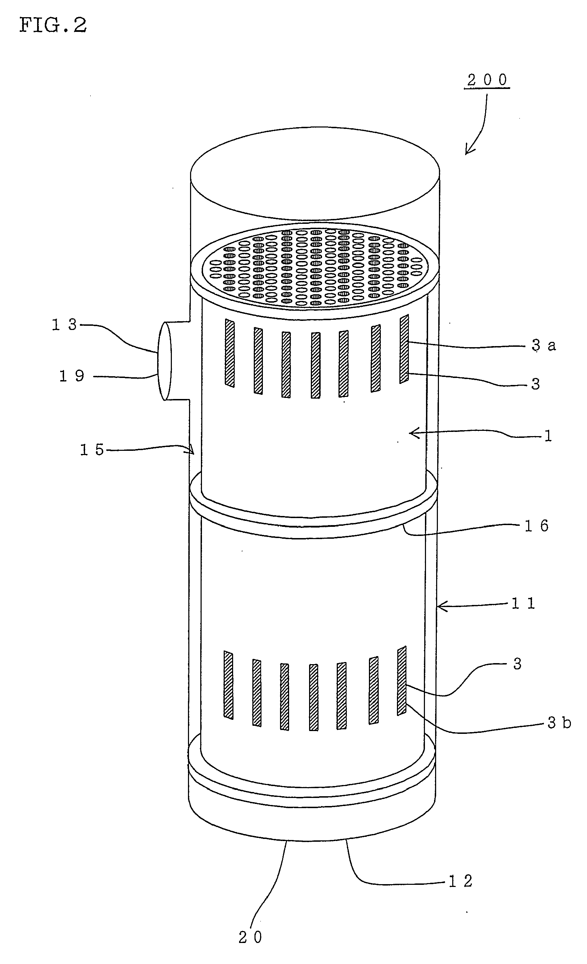

Fig. 2 is a perspective view showing another embodiment of the filter of the present invention. In Fig. 2, the filter is also illustrated so that the porous body 1 is visible through the casing 11 as in Fig. 1. In the filter 200 shown in Fig. 2, a flow stop 16 is disposed at the position on the side of backwashing liquid discharging opening 20 with respect to the backwashing inflow slits 3a in the void (space 15) between the casing 11 and the porous body 1 so that the backwashing liquid introduced from the backwashing liquid feed opening 19 does not move to the backwashing liquid discharging opening 20 side through the void (space 15) between the casing 11 and the porous body 1. By employing such construction, it becomes possible to inhibit the backwashing liquid from flowing into the porous body 1 from around the raw liquid feed opening 12 (backwashing liquid discharging opening 20), and hence the backwashing liquid in the larger amount can be allowed to flow into the porous body 1 from the backwashing liquid inflow slits 3a, and the whole porous body 1 can be more uniformly washed.

As shown in Fig. 2, in case the flow stop 16 is provided in the filter 200, liquid collecting slits 3 (backwashing liquid non-inflow slits 3b) may further be formed at the position on the side of the backwashing liquid discharging opening 20 with respect to the position at which the flow stop 16 is provided. In this case, the backwashing liquid is prevented from moving to the side of the backwashing liquid discharging opening 20 by the flow stop 16, and hence the backwashing liquid does not flow into the porous body from the backwashing liquid non-inflow slits 3b disposed at the position on the side of the backwashing liquid discharging opening 20. In the present invention, therefore, the backwashing liquid non-inflow slits 3b are not included in the backwashing liquid inflow slits 3a.

For example, in case the flow stop 16 is not provided in the filter 200 shown in Fig. 2, the backwashing liquid flows into the porous body also from the backwashing liquid non-inflow slits 3b, and, hence, "length of backwashing liquid inflow slit in axial direction" means the total of the length of the backwashing liquid inflow slit 3a in axial direction and the length of the backwashing liquid non-inflow slit 3b in axial direction in Fig. 2.

When a large amount of raw liquid must be treated using a filter of the present invention as a large-scaled filtering facilities such as water treatment plants and factories, many filters of the present invention can be connected. In this case, it is preferred that the raw liquid feed opening in each filter is connected through a flange to a raw liquid feed header tube for feeding the raw liquid to each filter, and the filtrate discharging opening is connected through a flange to a filtrate recovery header tube for recovering all the filtrates in total.

### (I-1) Porous body:

A filter of the present invention has a porous body which is monolithic. The porous body is preferably a ceramic porous body. Examples of the ceramics constituting the porous body include alumina (Al₂O₃), titania (TiO₂), mullite (Al₂O₃· SiO₂), and zirconia (ZrO₂). Among them, alumina is suitable because raw materials having controlled particle diameter are easily available, stable slurry can be prepared, and alumina has high corrosion resistance. Ceramics has such various merits that it is high in reliability because of its excellent mechanical strength and durability and less in deterioration caused by chemical cleaning with acid or alkali because of its high corrosion resistance, and furthermore accurate control of average pore diameter which determines filtering ability is possible.

As for the shape of the porous body, the shape of section perpendicular to the axial direction is not particularly limited, and it may be circle, ellipse, oval, triangle, quadrilateral and the like, and a columnar (cylindrical) body having a circular section is particularly preferred because the columnar body is easy in extrusion molding, less in firing deformation, and easy in sealing with the casing. The axial direction in this specification means the direction of central axis of column (or cylinder).

The size of the porous body is not particularly limited. When the porous body is a cylindrical body and has a plurality of rows of flowpaths, it is effective to provide liquid collecting flow paths (flow paths communicating with liquid collecting slits) and liquid collecting slits, but in this case, the problem of uneven backwashing is conspicuous. Even in the case of a small filter, the same problem occurs when the liquid collecting flow paths and liquid collecting slits are provided.

The sectional shape of the flow path formed in the porous body is not particularly limited, and circle is preferred in that solids (suspended materials) deposited on the membrane surface can be easily peeled and removed by backwashing, but quadrilateral or hexagon is preferred in that the filtering area per unit volume of the porous body can be made larger. The diameter of section of the flow path can be selected depending on the liquid to be treated (concentration of solid matter, size of solid matter, viscosity, and the like) from the viewpoints of securing the filtering area per unit volume, easiness in peeling of deposited solids by backwashing, and reduction of permeation resistance of filtrate in the porous body. For example, in the case of using the porous body for filtration of tap water, the diameter is preferably about 1-5 mm. Furthermore, for ensuring the strength of base material, void volume of all cells is preferably 80% or less of the volume of base material.

It is preferred that a filtrationmembrane which is smaller in pore diameter as compared with the pore diameter of the porous body is formed on the wall surface (inner peripheral surface) of the flow paths of the porous body. The liquid to be treated which is fed to the flow paths is first filtered by the filtration membrane and further permeates through the pores of the porous body and is discharged to the outside. Such porous body is superior in that it has a large filtering area per unit volume as compared with plate-like or tubular filtration membranes and is high in filtering ability. The filtration membrane preferably comprises ceramics like the porous body and is more preferably a thin membrane having an average pore diameter of several ten µm or less and a thickness of about 0.01-1.0 µ m. Such a filtration membrane can be formed by producing a film from slurry containing ceramic particles on the wall surface (inner peripheral surface) of the flow paths and firing the film to adhere to the surface. The pore diameter of the filtration membrane can be controlled by the particle diameter of the ceramic particles. The kind of the ceramic particles is not particularly limited, and there may be used, for example, alumina (Al₂O₃), titania (TiO₂), mullite (Al₂O₃· SiO₂) , zirconia (ZrO₂) , silica (SiO₂), spinel (MgO-Al₂O₃) or mixtures thereof. It is preferred to select materials of high corrosion resistance (e. g., alumina) since raw materials having controlled particle diameter are easily available and stable slurry can be obtained. The filtration membrane can be formed by a known method, for example, by dispersing the ceramic particles in a dispersion medium such as water, if necessary, with addition of an organic binder, a pH adjustor, a surface active agent, or the like, to prepare a slurry for film formation, forming a film from the slurry on the inner peripheral surface (flow path wall surface) of the porous body using a known method such as dip film forming method, drying the resulting film, and further firing the film.

Since the porous body is provided with slits, which break a part of the flow paths, in order to inhibit contamination of the filtrate caused by incorporation of the liquid to be treated, both ends of the flowpaths communicating with the slits (openings at the ends of the porous body) are airtightly plugged. The flow paths can be plugged, for example, by a method of filling a clogging member comprising the same material as of the porous body in both end parts, then coating the both end faces of the porous body with a glassy material and firing the coat for plugging. The clogging member and plugging member may be made of the same material (e.g., glassy materials). When average pore diameter of the porous body is large and no filtration membrane is formed at the both end faces of the porous body, the raw liquid entering in the porous body from the end faces of the porous body may incorporate in the filtrate which has already permeated through the filtration membrane and flowed through the porous body, and, hence, in order to inhibit the incorporation of the raw liquid to prevent contamination of the filtrate, the both end faces of the porous body is coated with a glassy material.

It can be considered to provide the slits of the porous body in a radial manner for the columnar body, but it is preferred to provide a plurality of the slits in parallel. This is because the distance from each flow path in the porous body to the outside is nearly equal, and the amounts of liquid permeating through all the flow paths are nearly the same. Accordingly, it becomes possible to effectively utilize all the flow paths in the porous body and perform uniform filtration.

### (I-2) Casing:

The term "casing" in this specification means a container which can house the porous body therein. That is, an internal space is formed in the casing, and the casing is constituted in such a manner that it can house the porous body in this internal space. As mentioned above, a columnar porous body is generally used, and, in many cases, the casing is in the form of cylinder capable of containing the columnar body. For example, when a columnar porous body is used, a cylindrical casing is suitable.

For example, as shown in Fig. 1, the filter 100 comprises a casing 11 and a porous body 1 contained in the casing so as to allow a liquid to flow in vertical direction. For example, in the case of using a columnar monolithic filter as the porous body 1, the monolithic filter is vertically placed in the casing so that the flow paths 2 extend in vertical direction and are open at the upper and lower end faces of the porous body 1. In such a filter 100, the liquid to be treated is fed from the lower end side of the porous body 1 (the one end 4 side of the porous body 1) and is allowed to flow to the upper end side (the other end 5 side of the porous body 1), thereby to perform filtration (so-called upward-flow filtration) . The liquid to be treated may be wholly filtered (so-called dead-end filtration), or a part of the liquid to be treatedmaybe filtered, and the remainder may be discharged from the upper end face (so-called cross-flow filtration). After filtration of the liquid to be treated, solids accumulated on the wall surface of the flow paths 2 is discharged to the other end 4 side of the porous body 1 by backwashing. Furthermore, the liquid to be treated may be fed from upper end side of the porous body 1 (the one end 5 side of the porous body 1) and may be allowed to flow towards the lower end side (the other end 4 side of the porous body 1), thereby to perform the filtration. The filter may be horizontally disposed.

As shown in Fig. 1, the backwashing liquid feed opening 19 formed on the casing 11 is preferably positioned near the backwashing liquid inflow slit 3a. By providing it near the backwashing liquid inflow slit 3a, the backwashing liquid fed from the backwashing liquid feed opening 19 upon backwashing can be allowed to flow in the backwashing liquid inflow slit 3a in a larger amount.

The casing is preferably constituted with a material impermeable to water and high in corrosion resistance. In the case of a porous body made of ceramics, a casing made of stainless steel is suitable.

### (II) Method of backwashing of filter:

The method for backwashing the filter of the present invention is a method for backwashing the above-mentioned filter of the present invention, where a backwashing liquid is allowed to flow into the porous body from at least the backwashing liquid inflow slits and discharging the backwashing liquid from one end of the porous body to thereby backwash the filter.

Since the method for backwashing the filter according to the present invention is a method for backwashing the filter of the present invention mentioned above, most of the backwashing liquid flows into the porous body from the backwashing liquid inflow slits upon backwashing, and thus it becomes possible to uniformly backwash the whole porous body.

In the present invention, the backwashing liquid is not particularly limited, and there may be used filtered water, filtrate, filtered water containing acid, alkali or oxidizing agent, separately prepared acid, alkali or oxidizing agent, or the like. The speed, time and temperature for allowing the backwashing liquid to flow are not particularly limited, and can be suitably selected depending on the state of contamination of the membrane.

### [Example]

The present invention will be explained in more detail by the following examples, which should not be construed as limiting the invention.

### (Examples 1-6 and Comparative Examples 1 and 2)

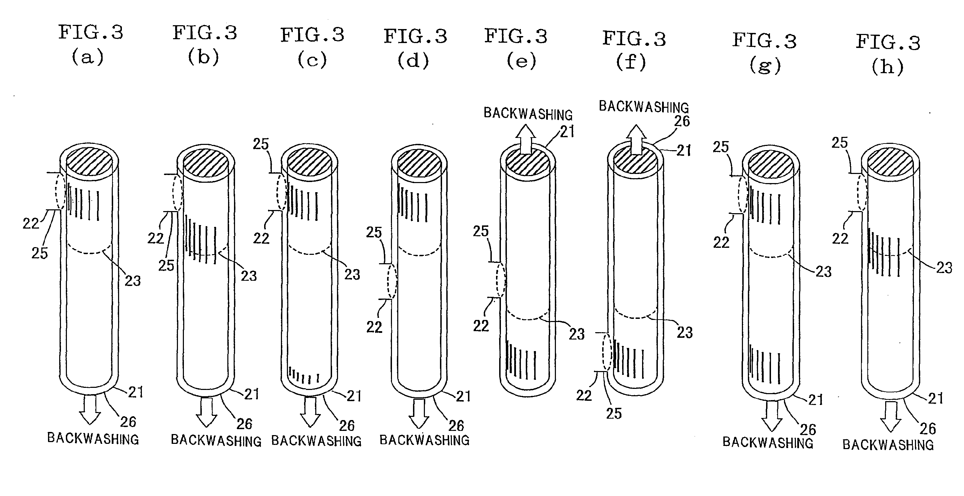

Filters shown in Fig. 3 (a) - Fig. 3 (h) (Examples 1-6 and Comparative Examples 1 and 2) having the following constructions were prepared. The porous body was a ceramic porous body mainly composed of alumina and formed by extrusion molding. A filtration membrane was formed in the flow paths of the porous body. The filtration membrane can be formed by producing a film from slurry containing ceramic particles on the wall surfaces (inner peripheral surfaces) of the flow paths and firing the film to adhere to the surfaces. The length of the filter was 1500 mm. The casing was made of stainless steel and had a raw liquid feed opening 21 serving also as a backwashing liquid discharging opening 26 and a filtrate discharge opening 22 serving also as a backwashing liquid feed opening 25. In Fig. 3 (a) - Fig. 3 (h), each casing was made of stainless steel, but, for convenience, was illustrated in such a manner that the casing is transparent so that the porous body therein can be seen through the casing. Furthermore, the position of slits and the position of the filtrate discharging opening 22 in each filter are shown in Table 1. In Table 1, for example, in the case of "position of slit" being "1350-1450", this means that the lower end of the slit in axial direction (vertical direction) was positioned at a height of 1350 mm in vertical direction from the lower end of the porous body and that the upper end of the slit in vertical direction was positioned at a height of 1450 mm in vertical direction from the lower end of the porous body. In the case of two ranges being mentioned, this means that slits were formed at two portions of the porous body. Moreover, in Table 1, for example, in the case of "position of filtrate discharging opening" being "1400-1500", this means that the lower end of the filtrate discharging opening in axial direction (vertical direction) was positioned at a height of 1400 mm in vertical direction from the lower end of the porous body and that the upper end of the filtrate discharging opening in vertical direction was positioned at a height of 1500 mm in vertical direction from the lower end of the porous body. The filtrate discharging opening 22 had a circular section.

### (Filter: common construction)

1. Basic design of module (filter): vertical type, 1 element (porous body) module, inner diameter of casing 210 mm φ
2. Basic specification of porous body: average pore diameter 0.1 µm, size 180 mmφ × 1500 mm (length in axial direction), area of filtration membrane 24 m², one liquid collecting cell was formed per 5 filtration channels

The average pore diameter was measured in accordance with ASTM F316-85.

### (Filter: Constructions of Examples 1-6 and Comparative Examples 1 and 2)

Example 1 (Fig. 3 (a)): All slits were formed around the backwashing liquid inflow opening 25 on the side of the end which was not the side of backwashing liquid discharging opening 26 of the porous body with respect to the position 23 which was 60% of the length in axial direction of the porous body from the end of the porous body on the side of backwashing liquid discharging opening 26 (hereinafter simply referred to as "60% position") . The raw liquid feed opening 21 serving also as the backwashing liquid discharging opening 26 was formed on the lower side in vertical direction. The filtrate discharging opening 22 was constructed to be served also as the backwashing liquid inflow opening 25.

Example 2 (Fig. 3 (b)): Slits were formed so that 75% of the length of all the slits was positioned in the end which was not on the side of backwashing liquid discharging opening 26 of the porous body with respect to the 60% position 23 of the porous body. The raw liquid feed opening 21 serving also as the backwashing liquid discharging opening 26 was formed on the lower side in vertical direction. The filtrate discharging opening 22 serving also as the backwashing liquid inflow opening 25 was formed around the end which was not on the side of backwashing liquid discharging opening 26 of the porous body.

Example 3 (Fig. 3 (c)): Slits were formed at the two portions one of which was near the end which was not on the side of backwashing liquid discharging opening 26 of the porous body and another one of which was near the end on the side of backwashing liquid discharging opening 26. The length of the slits in axial direction near the end which was not on the side of backwashing liquid discharging opening 26 was 75% of the total of the respective lengths of the slits. The slits having a length of 75% were formed so that they were positioned near the end which was not on the side of backwashing liquid discharging opening 26 of the porous body with respect to the 60% position 23 of the porous body. Furthermore, the slits near the end of the backwashing liquid discharging opening 26 were formed so that they were positioned at the end on the side of backwashing liquid discharging opening 26 with respect to the 60% position 23 of the porous body. The raw liquid feed opening 21 serving also as the backwashing liquid discharging opening 26 was formed on the lower side in vertical direction. The filtrate discharging opening 22 serving also as the backwashing liquid inflow opening 25 was formed near the end which was not on the side of backwashing liquid discharging opening 26 of the porous body.

Example 4 (Fig. 3 (d)): All the slits were formed on the side of the end which was not on the side of backwashing liquid discharging opening 26 of the porous body with respect to the 60% position 23 of the porous body. The raw liquid feed opening 21 serving also as the backwashing liquid discharging opening 26 was formed on the lower side in vertical direction. The filtrate discharging opening 22 serving also as the backwashing liquid inflow opening 25 was formed around the center of the porous body.

Example 5 (Fig. 3 (e)) : All the slits were formed on the side of the end which was not on the side of backwashing liquid discharging opening 26 of the porous body with respect to the 60% position 23 of the porous body. The raw liquid feed opening 21 was formed on the lower side in vertical direction and the backwashing liquid discharging opening 2 6 was formed on the upper side in vertical direction. The filtrate discharging opening 22 serving also as the backwashing liquid inflow opening 25 was formed around the center of the porous body.

Example 6 (Fig. 3(f)): All the slits were formed on the side of the end which was not on the side of backwashing liquid discharging opening 26 of the porous body with respect to the 60% position 23 of the porous body. The raw liquid feed opening 21 serving also as the backwashing liquid discharging opening 26 was formed on the upper side in vertical direction. The filtrate discharging opening 22 serving also as the backwashing liquid inflow opening 25 was formed on the lower side of the porous body.

Comparative Example 1 (Fig. 3 (g)) : Slits were formed at the two portions around the end which was not on the side of backwashing liquid discharging opening 26 of the porous body and around the end on the side of backwashing liquid discharging opening 26. The length of both the slits was the same. The slits around the end which was not on the side of backwashing liquid discharging opening 26 were formed so that they were positioned on the side of the end which was not on the side of backwashing liquid discharging opening 26 with respect to the 60% position 23 of the porous body. The slits around the end of the backwashing liquid discharging opening 26 were formed so that they were positioned on the side of the end which was not on the side of backwashing liquid discharging opening 26 with respect to the 60% position 23 of the porous body. The raw liquid feed opening 21 serving also as the backwashing liquid discharging opening 26 was formed on the lower side in vertical direction. The filtrate discharging opening 22 serving also as the backwashing liquid inflow opening 25 was formed around the end which was not on the side of backwashing liquid discharging opening 26 of the porous body.

Comparative Example 2 (Fig. 3 (h)): Slits were formed so that 50% of the length of all the slits was positioned at the end which was not on the side of backwashing liquid discharging opening 26 of the porous body with respect to the 60% position 23 of the porous body. The raw liquid feed opening 21 serving also as the backwashing liquid discharging opening 26 was formed on the lower side in vertical direction. The filtrate discharging opening 22 serving also as the backwashing liquid inflow opening 25 was formed around the end which was not on the side of backwashing liquid discharging opening 26 of the porous body.

**[Table 1]**

| | Position of slit (mm) | Position of filtrate discharging opening (mm) |
|---|---|---|
| Example 1 | 1350-1450 | 1400-1500 |
| Example 2 | 850-1050 | 1400-1500 |
| Example 3 | 50-100 & 1350-1450 | 1400-1500 |
| Example 4 | 1350-1450 | 700-800 |
| Example 5 | 50-150 | 700-800 |
| Example 6 | 50-150 | 0-100 |
| Comparative Example 1 | 50-150 & 1350-1450 | 1400-1500 |
| Comparative Example 2 | 800-1000 | 1400-1500 |

### (Filtration and backwashing operations)

The raw liquid (liquid to be treated) used in the filtration operation was river water, which had been subjected to an agglomeration treatment with PAC (polyaluminum chloride). The filtration operation was carried out for one month at a treating rate of 5 m/day of operation flux, and increase in transmembrane pressure was measured. The backwashing operation was carried out using 2 L/m² of filtered water under a backwashing pressure of 0.5 MPa once per 4 hours. The transmembrane pressure was measured from the difference between the pressure on the filtered water feeding side of the membrane and the pressure on the filtered water discharging side of the membrane. The increase in corrected transmembrane pressure after 30 days is shown in Table 2. In Table 2, the corrected transmembrane pressure (kPa) means the above measured pressure difference converted to a pressure difference in the case of the measuring temperature being 25°C in connection with the viscosity of water. When the backwashing is effective, increase in corrected transmembrane pressure after 30 days is small.

### Example 7

The filter of Example 7 shown in Fig. 4 (a) had the same construction as of Example 1 except that a flow stop 24 was disposed around the lower end of the filtrate discharging opening 22, and the same filtration and backwashing operations as in Example 1 were carried out to measure the increase in transmembrane pressure. The material of the flow stop 24 was polytetrafluoroethylene. The results of measurement of the increase in transmembrane pressure are shown in Table 2.

### Example 8

The filter of Example 8 shown in Fig. 4 (b) had the same construction as of Comparative Example 1 except that a flow stop 24 was disposed around the lower end of the filtrate discharging opening 22, and the same filtration and backwashing operations as in Comparative Example 1 were carried out to measure the increase in transmembrane pressure. The material of the flow stop 24 was the same as in Example 7. The results of measurement of the increase in transmembrane pressure are shown in Table 2. In the filter of Example 8, since the backwashing liquid was prevented from moving downwardly in vertical direction by the flow stop 24, only the slits on side of one end of the porous body (the upper side end in vertical direction) were "backwashing liquid inflow slits", and the slits on side of another end of the porous body (the lower side end in vertical direction) were slits into which the backwashing liquid did not flow.

**[Table 2]**

| | Increase in corrected transmembrane pressure (kPa) |
|---|---|
| Example 1 | 2 |
| Example 2 | 5 |
| Example 3 | 10 |
| Example 4 | 3 |
| Example 5 | 4 |
| Example 6 | 3 |
| Example 7 | 1 |
| Example 8 | 1 |
| Comparative Example 1 | 50 |
| Comparative Example 2 | 27 |

It can be seen from the results shown in Table 2 that the increase in corrected transmembrane pressure was small, namely, 10 kPa or smaller for one month. On the other hand, it can be seen that the corrected transmembrane pressure increased much in the filters of Comparative Examples 1 and 2. Furthermore, the corrected transmembrane pressure in the filter of Comparative Example 1 reached 50 kPa in one month, while the corrected transmembrane pressure in the filter of Comparative Example 2 did not reach 50 kPa in one month. This is because, in the filter of Comparative Example 1, there were formed great backwashing liquid inflow slits on the side of the end of porous body on the side of backwashing liquid discharging opening 26 (the lower end side in vertical direction), and hence the backwashing liquid flowedmuch to the side of backwashing liquid discharging opening 26 and backwashing was not uniformly performed through the whole porous body.

### [Industrial Applicability]

The filter of the present invention can be suitably used as a filter for solid-liquid separation in water purification process, or the like, and the porous body can be uniformly washed upon backwashing. According to the method for backwashing of the filter of the present invention, it is possible to uniformly backwash the filter and to suppress increase of transmembrane pressure caused by filtration operation.
The present inventive filter is a columnar porous body 1 having numerous flow paths 2 formed in parallel in axial direction, numerous liquid collecting slits 3 formed with extending in axial direction and allowing a group of the flow paths formed in parallel and the outside of the porous body to communicate with each other, wherein a group of the flow paths 2a communicating with the liquid collecting slits 3 are plugged at both ends. Liquid collecting slits 3a into which the backwashing liquid can flow among the liquid collecting slits 3 are disposed in such a manner that 75% or more of the length in axial direction is positioned on backwashing liquid non-outflow end side with respect to the position which is 60% of the length of the porous body 1 in axial direction from the backwashing liquid outflow end of the porous body 1.

## Claims

1. A filter provided with a columnar porous body having a plurality of flow paths formed in parallel in axial direction in which liquid collecting slits extending in axial direction and communicating, a group of the flow paths formed in parallel, with the outside of the porous body is formed in the porous body, both ends of the group of the flow paths communicating with the liquid collecting slits are plugged, and during filtration, a liquid to be treated which is fed to the flow paths from one end side of the porous body permeates through the pores of the porous body and flows out of the porous body, and during backwashing, a backwashing liquid flowing into the porous body from at least a part of the liquid collecting slits permeates through the pores of the porous body and flows out from the one end of the porous body, **characterized in that** liquid collecting slits into which the backwashing liquid can flow (backwashing liquid inflow slits) among the liquid collecting slits are disposed in such a manner that 75% or more of the length in axial direction of the slits is positioned on the side of the end of the porous body from which the backwashing liquid does not flow out with respect to the position which is 60% of the length in axial direction of the porous body from the end of the porous body from which the backwashing liquid flows out.

2. A filter according to claim 1 further provided with a casing capable of containing the porous body therein, said casing having a raw liquid feed opening capable of feeding a liquid to be treated (raw liquid) to the porous body and a filtrate discharging opening capable of discharging to the outside the filtrate flowing out of the porous body, said casing further having a backwashing liquid feed opening capable of feeding a backwashing liquid to the porous body and being formed to be served bifunctionally or independently of the filtrate discharging opening and a backwashing liquid discharging opening capable of discharging to the outside the backwashing liquid flowing out of the porous body and being formed to be served bifunctionally or independently of the raw liquid feed opening, a flow stop being disposed at the position on the side of backwashing liquid discharging opening with respect to the backwashing inflow slits in the space between the casing and the porous body so that the backwashing liquid introduced from the backwashing liquid feed opening does not move to the side of the backwashing liquid discharging opening through the space between the casing and the porous body.

3. A filter according to claim 1, wherein the porous body is a ceramic porous body.

4. A filter according to claim 2, wherein the porous body is a ceramic porous body.

5. A method for backwashing a filter comprising allowing a backwashing liquid to flow into the filter from at one end at which at least backwashing liquid inflow slits are formed and discharging backwashing liquid from another end of the porous body, wherein a filter is one being provided with a columnar porous body having a plurality of flow paths formed in parallel in axial direction in which liquid collecting slits extending in axial direction and communicating, a group of the flow paths formed in parallel, with the outside of the porous body is formed in the porous body, both ends of the group of the flow paths communicating with the liquid collecting slits are plugged, and during filtration, a liquid to be treated which is fed to the flow paths from one end side of the porous body permeates through the pores of the porous body and flows out of the porous body, and during backwashing, a backwashing liquid flowing into the porous body from at least a part of the liquid collecting slits permeates through the pores of the porous body and flows out from the one end of the porous body, **characterized in that** liquid collecting slits into which the backwashing liquid can flow (backwashing liquid inflow slits) among the liquid collecting slits are disposed in such a manner that 75% or more of the length in axial direction of the slits is positioned on the side of the end of the porous body from which the backwashing liquid does not flow out with respect to the position which is 60% of the length in axial direction of the porous body from the end of the porous body from which the backwashing liquid flows out.

6. A method for backwashing a filter according to claim 5, wherein the filter is further provided with a casing capable of containing the porous body therein, said casing having a raw liquid feed opening capable of feeding a liquid to be treated (raw liquid) to the porous body and a filtrate discharging opening capable of discharging to the outside the filtrate flowing out of the porous body, said casing further having a backwashing liquid feed opening capable of feeding a backwashing liquid to the porous body and being formed to be served bifunctionally or independently of the filtrate discharging opening and a backwashing liquid discharging opening capable of discharging to the outside the backwashing liquid flowing out of the porous body and being formed to be served bifunctionally or independently of the raw liquid feed opening, a flow stop being disposed at the position on the side of backwashing liquid discharging opening with respect to the backwashing inflow slits in the space between the casing and the porous body so that the backwashing liquid introduced from the backwashing liquid feed opening does not move to the side of the backwashing liquid discharging opening through the space between the casing and the porous body.

7. A method for backwashing a filter according to claim 5, wherein the porous body is a ceramic porous body.

8. A method for backwashing a filter according to claim 6, wherein the porous body is a ceramic porous body.
